# EUROPÄISCHE PATENTSCHRIFT

(11) **EP 0 643 797 B1**
(45) Veröffentlichungstag und Bekanntmachung des Hinweises auf die Patenterteilung: **17.07.1996**
(21) Anmeldenummer: 93912846.8
(22) Anmeldetag: 01.06.1993
(51) Int. Cl.: F01D 25/14

(54) **TRÄGERGEHÄUSE MIT INTEGRIERTEM LAGERGEHÄUSE FÜR EINEN TURBOLADER**
SUPPORT CASING WITH INTEGRATED BEARING HOUSING FOR A TURBO-CHARGER
CARTER-SUPPORT AVEC LOGEMENT DE PALIER INTEGRE POUR TURBOCOMPRESSEUR

(30) Priorität: 02.06.1992 DE 4218145; 02.06.1992 DE 4218146
(43) Veröffentlichungstag der Anmeldung: 22.03.1995
(73) Patentinhaber: MTU MOTOREN- UND TURBINEN-UNION FRIEDRICHSHAFEN GMBH, D-88040 Friedrichshafen (DE)
(72) Erfinder: HÖRL, Günther, D-7997 Immenstaad (DE); EBERHARDT, Edmund, D-7996 Meckenbeuren (DE)
(86) Internationale Anmeldenummer: EP9301374
(87) Internationale Veröffentlichungsnummer: WO9324735

(56) Entgegenhaltungen:
- EP-A- 0 014 778
- DE-A- 3 005 655
- FR-A- 2 363 699
- US-A- 2 582 916
- US-A- 3 673 798

## Beschreibung

Die Erfindung betrifft ein auf eine Brennkraftmaschine aufsetzbares Trägergehäuse für Abgasturbolader nach dem Oberbegriff von Anspruch 1, wie es beispielsweise aus der DE 34 39 738 C2 als bekannt hervorgeht.

Bei einer aufgeladenen Brennkraftmaschine nach der DE 34 39 738 C2 ist das Turbinengehäuse des Abgasturboladers in einem von einem Trägergehäuse gebildeten Hohlraum angeordnet. Das Verdichtergehäuse des Abgasturboladers befindet sich außerhalb des Hohlraums. Zur Befestigung wird der Abgasturbolader mit seinem Lagergehäuse in einer zylinderischen Aussparung der Seitenwand des Trägergehäuses aufgenommen und durch Schrauben am Trägergehäuse befestigt. Diese Aussparung zur Aufnahme des Lagergehäuses wird von zwei halbkreisförmigen Ausnehmungen an den Rändern eines Ober- und eines Unterteils gebildet, aus denen das Trägergehäuse zusammengesetzt ist. Bei abgenommenem Oberteil kann der Abgasturbolader zur Montage in die Aussparung am Unterteil eingelegt werden und nach Aufsetzen des Oberteils fertigmontiert werden.

Das Lagergehäuse des Abgasturboladers nach der DE 35 32 695 Cl ist zugleich als Motorstütze ausgebildet, die zwischen einer elastischen Auflagerung und der Brennkraftmaschine angeordnet ist. In dieser Doppelfunktion als Lagergehäuse und Motorstütze werden Bauteile eingespart, was entsprechende Vorteile hat. Allerdings ist es nicht immer möglich oder wünschenswert, einen Abgasturbolader in einem Bereich der Brennkraftmaschine anzuordnen, in dem das Lagergehäuse als Motorstütze dient.

Bei der aufgeladenen Brennkraftmaschine nach der DE 30 05 655 C2 dient ebenfalls ein auf der Brennkraftmaschine aufgesetztes trägergehäuse, das aus einem Unter- und einem Oberteil zusammengesetzt ist, zur platzsparenden Befestigung von Abgasturboladern. Dabei sind die Turbinengehäuse der Abgasturbolader und die zugehörigen Abgasleitungen innerhalb eines vom Trägergehäuse gebildeten Hohlraumes angeordnet. Die Verdichtergehäuse mit den zugehörigen Ladeluftleitungen befinden sich außerhalb des Hohlraumes. Die Abgasturbolader, die mit ihren Achsen horizontal angeordnet sind, sind im Bereich der Lagergehäuse in halbzylindrischen Aussparungen der Randbereiche von Ober- und Unterteil gelagert. Ober- und Unterteil liegen in einer horizontalen Teilungsfuge aneinander an. Bei abgenommenem Oberteil kann ein Abgasturbolader zur Montage in die Aussparung am Unterteil eingelegt werden und nach Aufsetzen des oberteils mit Schrauben an ober- und Unterteil befestigt werden. Beim Beispiel einer aus zwei Gruppen für zweistufige Aufladung bestehenden Laderanordnung umschließt das Trägergehäuse vier Turbinengehäuse, die in Bezug auf eine Hochachse des Trägergehäuses zentrisch symmetrisch in einem ebenfalls zentrisch symmetrisch ausgebildeten Trägergehäuse angeordnet sind. Als Nachteil an der dargestellten Ausbildung des Trägergehäuses wird gesehen, daß es aus unterschiedlich ausgebildeten Bauteilen besteht, die in der Herstellung teuer sind, weil zur Fertigung entsprechend unterschiedliche Werkzeuge bereitzustellen sind. Bei einer Gußkonstruktion, die üblich ist, werden unterschiedliche Formwerkzeuge benötigt, die teuer sind.

Der Erfindung liegt die Aufgabe zugrunde, das Trägergehäuse bei platzsparender Ausbildung in Herstellung und Montage zu vereinfachen und zu verbilligen.

Zur Lösung dieser Aufgabe sieht die Erfindung bei einem Trägergehäuse der eingangs beschriebenen Art vor, die Lagergehäuse der Abgasturbolader gemäß Anspruch 1 in den Wänden des Trägergehäuses zu integrieren. Das Trägergehäuse ist also derart ausgebildet, daß daran die Abgasturbolader nicht nur befestigt und die Abgasturbinengehäuse in einem Hohlraum angeordnet werden können, sondern daß es auch das Lagergehäuse enthält, in dem die Wellen der Abgasturbolader gelagert sind. Es enthält auch die zur Schmierung der Lager notwendigen Kanäle und dient als Schutzgehäuse für die Lagerbauteile. Die Lagergehäuse sind somit keine separaten Bauteile mehr, so daß die Anzahl der benötigten Bauteile reduziert wird, wodurch natürlich Herstellung und Montage vereinfacht wird. Besonders vorteilhaft ist es, wenn das Trägergehäuse als Gußkonstruktion mit eingeformten Lagergehäusen ausgebildet ist. Damit das Trägergehäuse von der Innenseite her zugänglich ist, ist es aus wenigstens zwei Teilen zusammengesetzt. Hier ist es zweckmäßig, in den Bereichen, in denen ein Abgasturbolader zu befestigen ist, nach Anspruch 2 keine Teilungsfuge zu legen, damit das Lagergehäuse keines Abgasturboladers geteilt wird, was für die Montage günstig ist. Vorteilhaft ist es hierbei, wenn das Trägergehäuse nach Anspruch 3 in einer Ebene parallel zu einer Hochachse geteilt ist. Die Abgasturbolader können dann an den Gehäuseteilen vollständig montiert werden, bevor die Gehäuseteile zum Trägergehäuse zusammengesetzt werden. Bei symmetrischem Trägergehäuse nach Anspruch 4 wird die Anzahl der Bauteile weiter eingeschränkt, und damit die Herstellung weiter verbilligt, weil mit demselben Werkzeug jeweils beide - symmetrischen - Gehäuseteile für ein Trägergehäuse hergestellt werden können. Die Gehäuseteile liegen in einer Teilungsfuge aneinander an, die in einer in der zentralen Hochachse des Trägergehäuses verlaufenden Ebene liegt. Bei Verwendung derart symmetrischer Gehäuseteile werden die Werkzeugkosten reduziert, weil weniger unterschiedliche Werkzeuge benötigt werden. Zugleich wird mit gleichen Bauteilen für beide Gehäuseteile die Montage und Lagerhaltung vereinfacht. Besonders platzsparend läßt sich das Trägergehäuse ausbilden, wenn die Gehäuseteile nach Anspruch 5 aus zwei in Bezug auf die Hochachse zentrisch symmetrisch ausgebildeten Gehäuseteilen besteht, an denen die Abgasturbolader ebenfalls zentrisch symmetrisch angeordnet sind . Platzsparend bei einfacher Montage lassen sich zwei Gruppen von zweistufigen Abgasturboladern anordnen, wenn nach Anspruch 6 jeweils jedem Gehäuseteil des Trägergehäuses ein Hoch- und ein Niederdruckabgasturbolader zugeordnet ist, deren Langsachsen in Richtung der Hochachse gesehen in einem spitzen Winkel zueinander liegen.

Ein Ausführungsbeispiel der Erfindung ist in der Zeichnung dargestellt und wird im folgenden näher erläutert; es zeigen:
- Fig. 1: einen Querschnitt durch ein Trägergehäuse mit montiertem Abgasturbolader mit im Trägergehäuse integriertem Lagergehäuse;
- Fig. 2: eine Draufsicht auf zwei Gruppen von in einem Trägergehäuse angeordneten Abgasturboladern für zweistufige Aufladung bei in Höhe der Durchgänge für die Laderaufnahme geschnittenem Trägergehäuse entlang der in Fig. 3 eingezeichneten Schnittlinien II-II;
- Fig. 3: eine Ansicht einer Hälfte des Trägergehäuses ohne Abgasturbolader in Richtung der in Fig. 2 eingezeichneten, in der Teilungsebene verlaufenden Schnittlinie III-III gesehen.

Das in der Figur im Querschnitt dargestellte Trägergehäuse 10 ist als Gußkonstruktion ausgebildet. Das Trägergehäuse 10 besteht im wesentlichen aus zwei Gehäuseteilen 11, 11', die an Flanschen 113 durch Schrauben miteinander verbunden sind. Das Trägergehäuse 10, das auf einer nicht dargestellten Brennkraftmaschine aufgesetzt wird, bildet einen Hohlraum, in dem das Gehäuse einer Turbine 107 eines Abgasturboladers 102 angeordnet ist. Der Verdichter 106 des Abgasturboladers 102 liegt außerhalb des vom Trägergehäuse 10 gebildeten Hohlraums. Das Trägergehäuse 10 ist mit einer doppelten Wand ausgebildet, in der Kühlwasser zirkuliert. Zum Durchtritt von Abgasleitungen, die mit dem Einlaß bzw. dem Auslaß der Turbine 107 verbunden sind, ist das Trägergehäuse mit entsprechenden Durchgängen versehen. Das Lagergehäuse 108 des Abgasturboladers 102 ist in eine Wand des Trägergehäuses 10 eingeformt. Zur Aufnahme eines Lagerstützrings 103 ist in das Trägergehäuse 10 eine zylindrische Aufnahmeöffnung eingeformt. Im Lagerstützring 103 sind die Gleitlagerbuchsen 104 der Welle 105 angeordnet, die mit den Laufrädern von Verdichter und Turbine verbunden ist. Zur Aufnahme von Axialkräften dient ein Axiallager 112. Verdichter 106 und Turbine 107 sind am Trägergehäuse 10 mit Schrauben befestigt. Das Trägergehäuse 10 enthält im weiteren einen Zulaufkanal 109 und einen Ablaufkanal 110 für das Schmieröl, das zur Schmierung der Lager dient. Der Ablaufkanal 110 ist mit einem Rohr 111 verbunden, das das Schmieröl in einen Sammelbehälter der Brennkraftmaschine zurückleitet. Durch geeignete Ausbildung der Kühlhohlräume im Trägergehäuse 10 werden die Lager des Abgasturboladers 102 gekühlt.

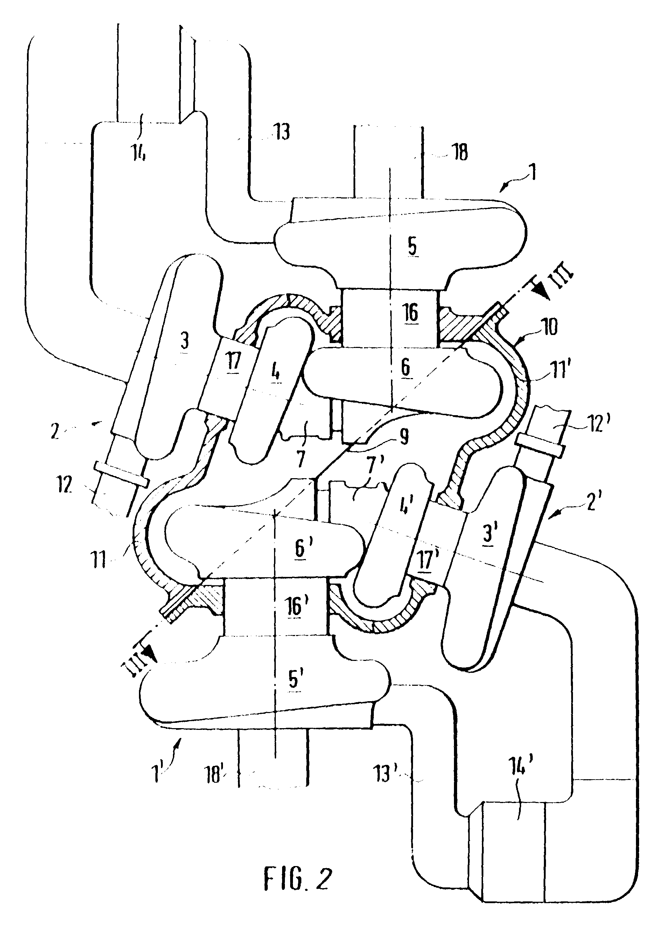

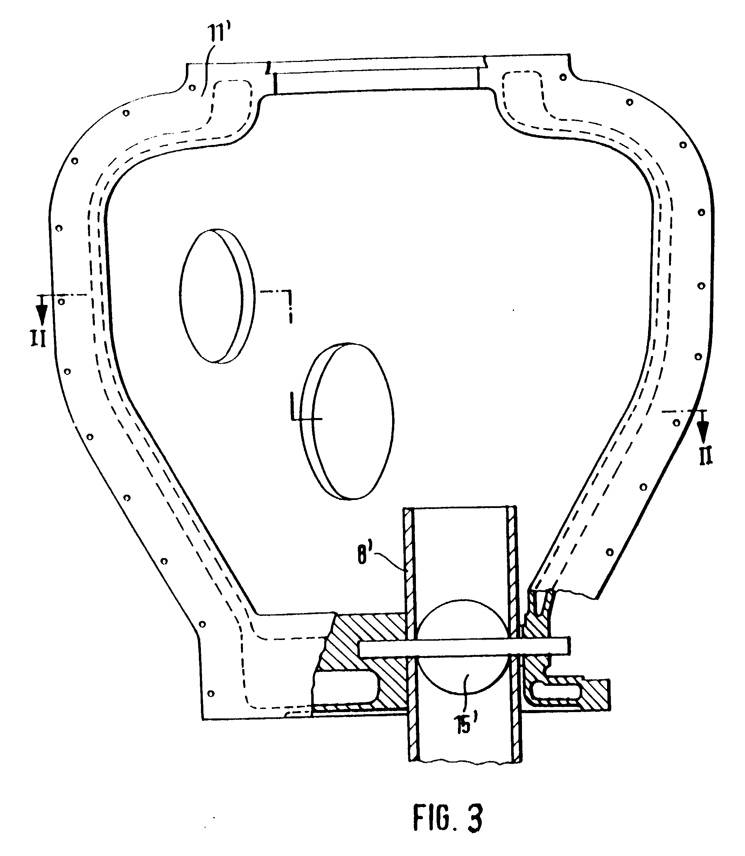

Das Trägergehäuse 10 kann natürlich zur Befestigung mehrerer Abgasturbolader (1, 2, 1', 2') wie nach Fig. 2 dienen. Die Ausbildung des Trägergehäuses 10 mit integrierten Lagergehäusen 108 erlaubt eine einfache Montage. Es ergeben sich Kostenersparnisse bei der Herstellung und der Lagerhaltung aufgrund einer reduzierten Anzahl von Bauteilen. Besonders vorteilhaft ist die Ausbildung des Trägergehäuses aus symmetrischen Gehäuseteilen mit mehreren symmetrisch angeordneten Abgasturboladern, wie nachfolgend anhand der Figuren 2 und 3 beschrieben.

Die in Fig. 2 in der Draufsicht gezeigte Turboladeranordnung besteht aus zwei Gruppen von Abgasturboladern 1, 2 und 1', 2', für zweistufige Aufladung, die bezüglich einer zentralen Hochachse zentrisch symmetrisch zueinander angeordnet sind. Die Hochdruckturbinen 4, 4' und Niederdruckturbinen 6, 6' der Abgasturbolader sind innerhalb des Trägergehäuses 10 angeordnet, das aus zwei Gehäuseteilen 11, 11' gebildet wird, die in einer Teilungsfuge 9 aneinander anliegen. Die Teilungsfuge verläuft in einer Ebene, die in der zentralen Hochachse des Trägergehäuses 10 liegt. Die Gehäuseteile 11, 11' sind bezüglich der zentralen Hochachse des Trägergehäuses 10 zentrisch symmetrisch ausgebildet. Die Abgasturbolader 1, 2, 1', 2' sind im Bereich ihrer Lagergehäuse 16, 17, 16', 17' in Durchgänge des Trägergehäuses 10 eingesetzt, und an Absätzen damit verschraubt. Das Trägergehäuse ist in verschiedenen Schnittebenen dargestellt, damit die Durchgänge, die in verschiedenen Höhen liegen, ersichtlich sind. Die Motorabgase gelangen über Durchführungen im Boden des Trägergehäuses 10 zu den Hochdruckturbinen 4 bzw. 4'. Über die Auslaßstutzen 7, 7' gelangen die Abgase danach in die Spiralgehäuse der Niederdruckturbinen 6, 6'. Die Ladeluft wird über die Ansaugstutzen 18, 18' in die Niederdruckverdichter 5, 5' angesaugt und anschließend über die Ladeluftleitungen 13, 13' und Ladeluftkühler 14, 14' den Eintrittsstutzen der Hochdruckverdichter 3, 3' zugeführt. Die verdichtete Ladeluft gelangt über Leitungen 12, 12' und weitere, jedoch nicht dargestellte Ladeluftkühler zu den Brennräumen der Brennkraftmaschine.

Fig. 3 zeigt eine Ansicht des Gehäuseteils 11' des Trägergehäuses 10 in Richtung der Schnittlinie III-III der Fig. 2 gesehen. Die Schnittlinie III-III liegt in der Teilungsfuge 9. Die Abgasturbolader sind nicht dargestellt. In der Seitenwand sind die Durchgänge zur Aufnahme der Lagergehäuse der Abgasturbolader dargestellt. Die Durchgänge sind jedoch nicht mit im Trägergehäuse integrierten Lagergehäusen dargestellt. Im Boden befindet sich, in einer versetzten Schnittebene dargestellt ein Durchgang, in dem ein Rohr 8' eingesetzt ist. Das Rohr 8' wird mit dem Einlaßstutzen der Hochdruckturbine 4' verbunden. An der Oberseite des Trägergehäuses ist ein Durchgang für eine Abgasleitung zur Abfuhr des die Abgasturbinen verlassenden Abgasstromes vorgesehen. Je nach Betriebszustand der Brennkraftmaschine kann über die Klappe 15' der Zutritt von Abgas abgesperrt werden. Die Gehäuseteile 11' und 11 des Trägergehäuses sind über Schrauben an einem umlaufenden Flansch miteinander verschraubt. Das Trägergehäuse 10 weist Hohlräume auf, in denen das Kühlwasser der Brennkraftmaschine zirkuliert. Diese Hohlräume sind in Fig. 2 jedoch nicht dargestellt. Als Vorteil der vertikalen Teilung des Trägergehäuses wird gesehen, daß das Trägergehäuse aus zwei symmetrischen Gehäuseteilen zusammengesetzt werden kann. Die Symmetrie der Bauteile hat den Vorteil reduzierter Herstellungskosten und vereinfachter Montage.

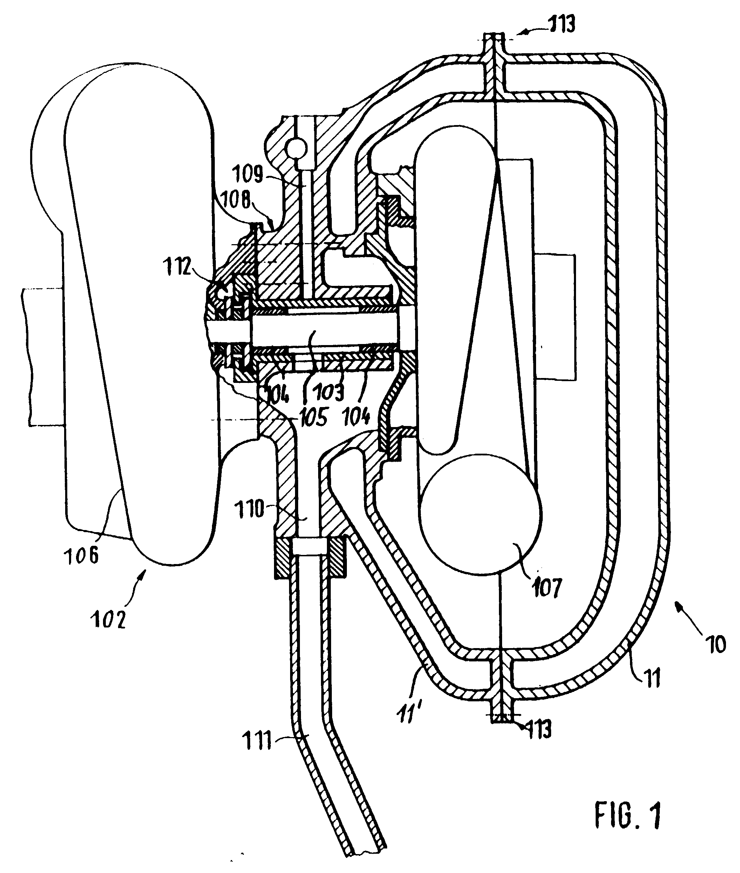

Eine weitere Bauteilereduktion findet statt, wenn, wie im Zusammenhang mit Fig. 1 beschrieben, die Lagergehäuse 16, 17, 16', 17' der Abgasturbolader im Trägergehäuse 10 integriert sind.

Damit die Lagergehäuse im Trägergehäuse nicht geteilt sind, ist das Trägergehäuse vorzugsweise so in zwei Gehäusehälften zu teilen, daß die Teilungsfuge außerhalb der Bereiche verläuft, in denen die Lagergehäuse angeordnet sind.

## Patentansprüche

1. Auf eine Brennkraftmaschine aufsetzbares Trägergehäuse (10) für wenigstens zwei Abgasturbolader (102), wobei die Abgasturbolader (102) jeweils mit zwei auf einer gemeinsamen Welle (105) angeordneten Laufrädern ausgebildet sind, von denen eines in einem Verdichtergehäuse und das andere in einem Turbinengehäuse angeordnet ist, während die gemeinsame Welle (105) jeweils in einem zwischen Verdichter- und Turbinengehäuse angeordneten Lagergehäuse (108) gelagert ist, wobei die Turbinengehäuse der Abgasturbolader Strömungsräume bilden, die jeweils einen Spiralkanal, einen daran anschließenden, radial innenliegenden Laufradkanal und einen axial gerichteten Auslaßkanal umfassen, wobei das Trägergehäuse (10) als kastenartige, einen Hohlraum beinhaltende Tragvorrichtung für die Abgasturbolader (102) ausgebildet ist, an der die Abgasturbolader (102) befestigt sind, wobei die Verdichtergehäuse außerhalb des Hohlraums und die Turbinengehäuse innerhalb des Hohlraums angeordnet sind, wobei in den Wandungen des Trägergehäuses (10) Aussparungen für den Durchtritt der Wellen (105) der Abgasturbolader (102) vorgesehen sind und Öffnungen für die Zu- und Ableitung der Abgase zu und von den Turbinengehäusen, dadurch gekennzeichnet, daß die Lagergehäuse (108) der Abgasturbolader (102) in den Wandungen des Trägergehäuses (10) integriert sind.

2. Trägergehäuse nach Anspruch 1, dadurch gekennzeichnet, daß bei einem aus mehreren Gehäuseteilen (11, 11') zusammengesetzten Trägergehäuse (10) die Teilungsfuge (9) zwischen den Gehäuseteilen (11, 11') außerhalb der Wandbereiche verläuft in denen die Aussparungen zur Aufnahme der Abgasturbolader (102) vorgesehen sind.

3. Trägergehäuse nach Anspruch 1 oder 2, dadurch gekennzeichnet, daß das Trägergehäuse (10) in wenigstens einer parallel zu einer Hochachse des Trägergehäuses (10) verlaufenden Ebene geteilt ist, wobei die Hochachse in Richtung einer gemeinsamen Flächennormalen auf die von den Längsachsen der Abgasturbolader (1, 2, 1', 2') aufgespannten Ebenen verläuft, und daß die Abgasturbolader (1, 2, 1', 2') an seitlichen Wänden des Trägergehäuses (10) befestigt sind, die parallel zur Hochachse verlaufen.

4. Trägergehäuse nach Anspruch 3, dadurch gekennzeichnet, daß das Trägergehäuse (10) in Bezug auf eine parallel zur Hochachse verlaufende Ebene in zwei im wesentlichen symmetrische Gehäuseteile (11, 11') geteilt ist.

5. Trägergehäuse nach Anspruch 3, dadurch gekennzeichnet, daß das Trägergehäuse (10) in Bezug auf eine zur Hochachse parallele Symmetrieachse des Trägergehäuses (10) aus zwei zentrisch symmetrischen Gehäuseteilen (11, 11') gebildet ist, an denen die Abgasturbolader (1, 2, 1', 2') in Bezug auf die Symmetrieachse zentrisch symmetrisch angeordnet sind.

6. Trägergehäuse nach einem der Ansprüche 2 bis 5, dadurch gekennzeichnet, daß jeweils jedem der Gehäuseteile (11, 11') Abgasturbolader (1, 2 bzw, 1', 2') für zweistufige Aufladung zugeordnet sind, und daß die Längsachsen der Abgasturbolader (1, 2 bzw. 1', 2') in Richtung der Hochachse gesehen jeweils in einem spitzen Winkel zueinander liegen.

## Claims

1. A support housing (10) to be mounted on an internal-combustion engine for at least two exhaust-driven chargers (102), wherein the exhaust-driven chargers (102) are each formed with two rotors mounted on a common shaft (105), one of which is disposed in a compressor housing and the other of which is disposed in a turbine housing, wherein the common shaft (105) is mounted respectively in a bearing housing (108) disposed between the compressor housing and turbine housing, the turbine housings of the exhaust-driven chargers forming flow chambers each of which comprises a spiral duct, adjoining a radially inner rotor duct, and an axially directed outlet duct, wherein the support housing (10) is in the form of a box-type support device containing a cavity for the exhaust-driven chargers (102), to which the exhaust-driven chargers (102) are secured, the compressor housing being disposed outside the cavity and the turbine housing being disposed inside the cavity, wherein recesses for the passage of the shafts (105) of the exhaust-driven chargers (102) are provided in the walls of the support housing (10) and openings for the inlet and outlet of exhaust gases to and from the turbine housings, characterised in that the bearing housing (108) of the exhaust-driven chargers (102) are integrated in the walls of the support housing (10).

2. A support housing according to Claim 1, characterised in that in the case of a support housing (10) composed of a plurality of housing parts (11,11'), the dividing joint (9) between the housing parts (11,11') extends out of the wall regions in which the recesses for accommodating the exhaust-driven chargers (102) are provided.

3. A support housing according to Claim 1 or 2, characterised in that the support housing (10) is divided in at least one plane extending parallel to a vertical axis of the support housing (10), the vertical axis extending in a direction normal to the surface of each plane in which the longitudinal axes of the exhaust-driven chargers (1,2,1',2') are clamped, and in that the exhaust-driven chargers (1,2,1',2') are mounted on lateral walls of the support housing (10), which extend parallel to the vertical axis.

4. A support housing according to Claim 3, characterised in that in relation to a plane extending parallel to the vertical axis the support housing (10) is divided into two substantially symmetrical housing parts (11,11').

5. A support housing according to Claim 3, characterised in that in relation to an axis of symmetry of the support housing (10) parallel to the vertical axis, the support housing (10) is formed by two centrally symmetrical housing parts (11,11'), on which the exhaust-driven chargers (1,2,1',2') are arranged centrally symmetrically in relation to the axis of symmetry.

6. A support housing according to any one of Claims 2 to 5, characterised in that exhaust-driven chargers (1,2 and 1',2') for two-stage supercharging are respectively assigned to each of the housing parts (11,11'), and in that, viewed in the direction of the vertical axis, the longitudinal axes of each of the exhaust-driven chargers (1,2 and 1',2') are disposed at an acute angle to one another.

## Revendications

1. Carter-support (10), pouvant se poser sur un moteur à combustion interne, pour au moins deux turbo-compresseurs (102) sur gaz d'échappement, dans le cas duquel les turbo-compresseurs (102) sur gaz d'échappement sont chacun conçus avec deux rotors qui sont disposés sur un arbre commun (105) et dont l'un est disposé dans un carter de compresseur et l'autre, dans un carter de turbine, tandis que l'arbre commun (105) est chaque fois porté dans un logement de palier (108) disposé entre le carter de compresseur et le carter de turbine, dans le cas duquel les carters de turbine des turbo-compresseurs sur gaz d'échappement forment des espaces d'écoulement qui comprennent chacun un canal spiral, un canal de rotor, situé radialement à l'intérieur et qui s'y raccorde, et un canal de sortie orienté axialement, dans le cas duquel le carter-support (10) est conçu sous forme d'un dispositif support pour les turbo-compresseurs (102) sur gaz d'échappement, qui est du type caisson, contient un espace creux et auquel sont fixés les turbo-compresseurs (102) sur gaz d'échappement, dans le cas duquel les carters de compresseur sont disposés à l'extérieur de l'espace creux et les carters de turbine, à l'intérieur de l'espace creux, dans le cas duquel, dans les parois du carter-support (10), sont prévus des évidements pour le passage des arbres (105) des turbo-compresseurs (102) sur gaz d'échappement et des ouvertures pour l'arrivée des gaz d'échappement dans les carters de turbine et leur évacuation hors de ces carters, caractérisé par le fait que les logements de palier (108) des turbo-compresseurs (102) sur gaz d'échappement sont intégrés dans les parois du carter-support (10).

2. Carter-support selon la revendication 1, caractérisé par le fait que dans le cas d'un carter-support (10) constitué de plusieurs parties (11, 11') de carter, le joint de division (9) passe entre les parties (11, 11') de carter, à l'extérieur des zones de parois où sont prévus des évidements pour recevoir les turbo-compresseurs (102) sur gaz d'échappement.

3. Carter-support selon la revendication 1 ou 2, caractérisé par le fait que le carter-support (10) est divisé en au moins un plan orienté parallèlement à un axe vertical du carter-support (10), l'axe vertical étant orienté selon la direction d'une normale commune aux plans passant par les axes longitudinaux des turbo-compresseurs (1, 2, 1', 2') sur gaz d'échappement, et que les turbo-compresseurs (1, 2, 1', 2') sur gaz d'échappement sont fixés aux parois latérales du carter-support (10) qui sont orientées parallèlement à l'axe vertical.

4. Carter-support selon la revendication 3, caractérisé par le fait que le carter-support (10) est divisé en deux parties (11, 11') de carter sensiblement symétriques par rapport à un plan orienté parallèlement à l'axe vertical.

5. Carter-support selon la revendication 3, caractérisé par le fait que le carter-support (10) est formé de deux parties (11, 11') de carter qui sont symétriques par rapport à un axe de symétrie du carter-support (10) parallèle à l'axe vertical et dans lesquelles les turbo-compresseurs (1, 2, 1', 2') sur gaz d'échappement sont disposés symétriquement par rapport à l'axe de symétrie.

6. Carter-support selon l'une des revendications 2 à 5, caractérisé par le fait qu'à chacune des parties (11, Il') de carter sont associés des turbo-compresseurs (1, 2 ou 1', 2') sur gaz d'échappement pour suralimentation biétagée, et que les axes longitudinaux des turbo-compresseurs (1, 2 ou 1', 2') sur gaz d'échappement font entre eux, vu selon la direction de l'axe vertical, un angle aigu.
